# EUROPÄISCHE PATENTSCHRIFT

(11) **EP 3 079 457 B1**
(45) Veröffentlichungstag und Bekanntmachung des Hinweises auf die Patenterteilung: **04.04.2018**
(21) Anmeldenummer: 14815226.7
(22) Anmeldetag: 06.11.2014
(51) Int. Cl.: A01D 42/00, A01B 71/00, E01H 1/05, E01H 5/09

(54) **ANTRIEBSSYSTEM**
DRIVE SYSTEM
SYSTÈME D'ENTRAÎNEMENT

(30) Priorität: 06.11.2013 DE 202013010073 U
(43) Veröffentlichungstag der Anmeldung: 19.10.2016
(73) Patentinhaber: Lau, Andrew Manson, 78549 Spaichingen (DE)
(72) Erfinder: Lau, Andrew Manson, 78549 Spaichingen (DE)
(74) Vertreter: Binner, Bernhard
(86) Internationale Anmeldenummer: PCT/EP2014/002968
(87) Internationale Veröffentlichungsnummer: WO 2015/067365

(56) Entgegenhaltungen:
- CN-Y- 201 243 489
- DE-A1- 3 641 634

## Beschreibung

Die Erfindung betrifft ein Antriebssystem für ein motorisch betriebenes Funktionsgerät, welches als Multifunktions- oder Kombinationsgerät zur Boden- und Rasenbearbeitung wie Vertikutieren, Lüften, Hacken, Rasenmähen, Walzen, Verdichten, Kantenschneiden oder Räumungsarbeit wie Schneefräsen, Kehren, oder zum Notdienst wie Wasserpumpen, Stromversorgung oder dergleichen dienen kann, bestehend aus einem Primärantrieb, zwei an einem Grundgestell des Funktionsgeräts angeordneten Lagermodulen, und einer über die Lagermodule am Grundgestell drehend gelagerten Antriebswelle, auf welcher das jeweilige Arbeitsgerät drehfest angeordnet ist, wobei das Grundgestell zur Aufnahme der Lagermodule zwei seitlich beabstandete Montage- oder Lagerplatten aufweist, welche senkrecht zur Drehachse des eingesetzten Arbeitsgerätes verlaufen.

Funktionsgeräte der gattungsgemäßen Art sind schon seit längerem in vielfachen Ausgestaltungen bekannt.

Aus der DE 2 017 981 A ist ein derartiges Funktionsgerät bekannt, bei dem ein Zwischengetriebe durch einen Elektro- oder Benzinmotor angetrieben wird, welches über eine Steckachse die verschiedenen Arbeitsgeräte antreiben kann. Da bei diesem Funktionsgerät ein einziges Getriebe eingesetzt wird, ist eine funktionale Redundanz durch die eingebauten Getriebegänge und deren hohes Gewicht, die nicht unbedingt für jede Arbeitskonfiguration erforderlich und gewünscht sind, unvermeidbar.

Die Druckschrift DE 103 35 679 A1 weist ein Antriebssystem für Garten-, Hof- und Hausgeräte wie Mäher, Vertikutierer, Kehrgeräte, Laubsammler und dergleichen auf, bei welchem ein Wechsel- oder Gleichstrommotor und gegebenenfalls ein Untersetzungsgetriebe im Kern der Arbeitsspindel angeordnet sind. Nach den Ansprüchen dieser Druckschrift ist das Antriebssystem besonders für die Arbeitskonfiguration Kehren gedacht, wobei das gesamte Getriebe von der Kehrwalze umschlossen ist. Sobald aber eine andere Arbeitskonfiguration wie zum Beispiel Bodenhacken oder Schneefräsen mit anderem Drehzahlbereich erforderlich ist, wird der Einbau eines Getriebes in der Arbeitsspindel durch die begrenzte Räumlichkeit erheblich erschwert, da die beiden Funktionen vom Arbeitsbereich in radialer Richtung abhängen, wie die Grabtiefe beim Bodenhacken oder die Auswurfmenge beim Schneefräsen.

In der DE 10 2006 028 127 B4 ist eine Funktionseinheit eines Funktionsgeräts beschrieben, welche mindestens ein Werkzeug aufweist, das als Modul ausgebildet und an dem Gehäuse des Funktionsgeräts anbringbar ist. Weiterhin weist die Funktionseinheit ein Getriebe auf, welches die Antriebsleistung des Antriebsmotors für das jeweilige Werkzeug der Funktionseinheit geeignet umsetzt. Da in jeder Funktionseinheit ein Getriebe mit integriert wird, ist das Funktionsgerät durch die Anzahl von Getriebe und dessen Komponenten wirtschaftlich ungünstig.

Die Druckschrift DE 38 12 105 C2 offenbart ein Funktionsgerät für Garten und Straße. Bei dieser Vorrichtung ist ein halbseitig nach vorne offenes Gehäuse vorgesehen, in welches unterschiedliche Arbeitsgeräte eingesetzt sind. Diese Arbeitsgeräte befinden sich dabei wiederum in einem eigenen Gehäuseteil, das zusammen mit dem Arbeitsgerät in das Grundgehäuse einsetzbar und dort arretierbar ist. Als Arbeitsgeräte werden auch hier Vorrichtungen zum Rasenmähen, Vertikutieren, Schneefräsen, Kehren und auch ein Gebläse erwähnt. Bei diesem Funktionsgerät sind die Arbeitsmodule durch den Eingriff eines eigenes Ritzels mit dem Innenritzel eines Grundgestells antreibbar, um das Rasenmähen, Vertikutieren, Schneefräsen, Kehren und Laubblasen zu ermöglichen. Nachteilig an solchen Antriebssystemen ist, dass eine Redundanz von Antriebskomponenten auf dem Grundgestell vorzusehen sind. Des Weiteren sollen die Arbeitsgeräte seitlich auf das Grundgestell aufschiebbar sein, wo diese dann arretierbar sind. Beim Einsetzen wird des Weiteren eine Arbeitsachse über ein Ritzel mit dem eigentlichen Antrieb mechanisch verbunden. Diese Vorrichtung ist äußert aufwändig aufgebaut und bedarf zum Einsatz der verschiedenen Arbeitsgeräte unterschiedlich ausgestalteter Gehäuse, welche zusammen mit dem jeweils gewählten Arbeitsgerät in das Grundgehäuse einzusetzen sind.

Des Weiteren ist aus der Druckschrift DE 31 00 904 C2 ein motorisch angetriebenes Räumhandgerät zum Schneeräumen, Kehren oder Vertikutieren bekannt. Dieses Gerät weist ein einheitliches Gehäuse auf, in welchem mehrere walzenartig ausgebildete Arbeitsgeräte einsetzbar sind, wie dies bereits schon zur Druckschrift DE 2 017 981 A beschrieben wurde. In der DE 31 00 904 C2 ist ein Funktionsgerät beschrieben, bei dem als Arbeitswelle austauschbar eine Schneefräse, eine Vertikutierwelle oder eine Bürstenwalze vorgesehen ist, und in welchem Wellenraum zwei Getriebeanschlüsse als Steckkupplungen für mindestens zwei unterschiedliche Arbeitsausführungen ausgebildet sind. Nachteilig ist bei einem solchen Funktionsgerät die Redundanz von Antriebskomponenten, deren Einsatz nur bei einer der jeweiligen Arbeitskonfigurationen benötigt wird. Es ist folglich für jeden Einsatzzweck eine eigene Antriebskomponente vorzusehen.

Aus der DE 201 14 196 U1 ist ein derartiges Funktionsgerät bekannt, bei dem durch Einsatz der verschiedenen Arbeitswerkzeuge in das Gerät eine automatische Anpassung der Drehzahl bzw. des Drehzahlbereiches des jeweiligen Arbeitswerkzeugs abhängig von dem jeweiligen Arbeitswerkzeug erfolgen kann. Da das Über- bzw.

Untersetzungsverhältnis zwischen einem geräteseitigen Antrieb und einem werkzeugseitigen Abtrieb beim Einsetzen des jeweiligen Arbeitswerkzeugs abhängig vom Arbeitswerkzeug eingestellt werden kann, ist das Antriebssystem geräteseitig durch die gebundene Redundanz von Antriebskomponenten, oder werkzeugseitig durch das in jedem Arbeitswerkzeug integrierte Getriebe benachteiligt.

Die Druckschrift CN 2012 43 489 Y zielt darauf ab, Arbeitswerkzeuge eines Funktionsgeräts schnell austauschen zu können, wobei das jeweilige Werkzeug senkrecht zur Arbeitsspindel verschiebbar ist und dessen Ende mit den am Grundgestell gelagerten Drehachsen durch eine in Richtung der Arbeitsspindel zugeordnete Hülse gekoppelt und arretiert werden kann. Da sich die gefederte Hülse zwischen der Innenwandung des Grundgestells und dem austauschbaren Werkzeug befindet und erst manuell betätigt bzw. abgekoppelt werden muss, wird der Werkzeugwechsel durch diese räumliche Anordnung erheblich erschwert und das Risiko einer körperlichen Verletzung infolgedessen deutlich erhöht.

Das Hauptproblem bei den bekannten Funktionsgeräten ist, dass ein vorhandenes Getriebe permanent an einem Grundgerät oder permanent im Werkzeug integriert ist.

Demgemäß liegt der Erfindung die Aufgabe zugrunde, ein Antriebssystem für ein Funktionsgerät der gattungsgemäßen Art derart auszugestalten, dass einerseits ein Wechsel der verschiedenen Arbeitsgeräte in einfacher Art und Weise möglich ist und andererseits jedes Arbeitsgerät mit einer dem Einsatzzweck entsprechenden optimalen Drehzahl und Drehrichtung einsetzbar ist.

Die Aufgabe wird erfindungsgemäß zusammen mit den Merkmalen des Oberbegriffes des Anspruchs 1 dadurch gelöst, dass die Lagermodule als separate Baueinheiten ausgebildet sind, welche wahlweise mit einer der Montage- oder Lagerplatten über Schnellverschlüsse gegeneinander austauschbar koppelbar sind, und dass die für die jeweilige Arbeitsaufgabe erforderlichen Drehzahlbereiche und Drehrichtungen für die jeweiligen Arbeitsgeräte durch die Auswahl unterschiedlicher Kombinationen von Lagermodulen und mit dem jeweiligen Arbeitsgerät in drehfester Verbindung stehenden Antriebswellen erfolgt.

Durch die erfindungsgemäße Ausgestaltung des Funktionsgerätes sind die einzelnen Arbeitsgeräte in einfacher Art und Weise austauschbar. Durch die als separate Bauteile ausgebildeten Lagermodule, können diese - je nach Einsatzzweck bzw. eingesetztem Arbeitsgerät - einfach über die Schnellverschlüsse an den Montageplatten ausgetauscht werden, wobei diese bei der Montage gleichzeitig mit einer Antriebswelle des Arbeitsgerätes gekoppelt werden. Die Lagermodule sind dabei derart ausgebildet, dass diese mit und ohne Getriebeeinheiten ausgestattet sein können, so dass durch die Wahl der Lagermodule die benötigte Drehzahl und/oder Drehrichtung des Arbeitsgerätes in einfacher Weise einstellbar ist. Für unterschiedliche Arbeitsgeräte können auch dieselben Kombinationen von Lagermodulen und/oder Antriebswellen gewählt werden.

So bietet die Erfindung eine nicht permanente Lösung an, bei welcher das Getriebe nicht fester Bestandteil des Funktionsgerätes oder Arbeitsgerätes ist. Das Austauschen der verschiedenen Arbeitswerkzeuge kann gleichzeitig mit dem Getriebewechsel durch Austauschen der Lagermodule erfolgen, wodurch sowohl Drehzahl, Drehmoment und Drehrichtung in einfacher Weise einstellbar sind.

Weitere vorteilhafte Ausgestaltungen der Erfindung sind den weiteren Unteransprüchen entnehmbar.

Allen Arbeitsgeräten ist gemeinsam, dass diese etwa walzenartig ausgebildet sind und dass deren jeweilige Drehachse im Betrieb im Wesentlichen parallel zum zu "bearbeitenden" Untergrund und etwa quer zur Fahrrichtung verläuft.

Anhand der Zeichnung wird die Erfindung nachfolgend beispielhaft näher erläutert. Es zeigt:
- Fig. 1: eine perspektivische Darstellung einer möglichen Ausführungsvariante eines Funktionsgerätes mit einem drehbaren Gehäuse ohne eingesetztes Arbeitsgerät;
- Fig. 1a: eine vergrößerte perspektivische Darstellung einer "Außenansicht" einer Montageplatte des Funktionsgerätes aus Fig. 1;
- Fig. 2: den Riementrieb des Funktionsgerätes aus Fig. 1 in perspektivischer Darstellung;
- Fig. 3: eine Frontansicht II des Gehäuses des Funktionsgerätes aus Fig. 1 in einer vereinfachten Prinzipdarstellung;
- Fig. 4: eine perspektivische Darstellung eines ersten Lagermoduls ohne Getriebeeinheit;
- Fig. 5: eine schematische Schnittdarstellung des Lagermoduls aus Fig. 4;
- Fig. 6: eine perspektivische Darstellung eines zweiten Lagermoduls mit Getriebeeinheit;
- Fig. 7: eine schematische Schnittdarstellung des Lagermoduls aus Fig. 6;
- Fig. 8: eine perspektivische Darstellung eines dritten Lagermoduls ohne Getriebeeinheit;
- Fig. 9: eine schematische Schnittdarstellung des Lagermoduls aus Fig. 8;
- Fig. 10: eine perspektivische Darstellung eines vierten Lagermoduls mit Getriebeeinheit;
- Fig. 11: eine schematische Schnittdarstellung des Lagermoduls aus Fig. 10;
- Fig. 12: eine perspektivische Darstellung einer zentralen Antriebswelle, welche als Einzelantriebswelle ausgebildet ist;
- Fig. 13: eine perspektivische Darstellung einer Doppelantriebswelle;
- Fig. 14: eine Schnittdarstellung der Doppelantriebswelle aus Fig. 13;
- Fig. 15: eine schematische Darstellung einer Antriebskombination beim Einsatz als Bodenhacke;
- Fig. 16: eine schematische Darstellung einer Antriebskombination beim Einsatz als Kehrwalze;
- Fig. 17: eine schematische Darstellung einer Antriebskombination beim Einsatz als Bodenlüfter.
- Fig. 18: eine schematische Darstellung einer Antriebskombination beim Einsatz als Schneefräse.

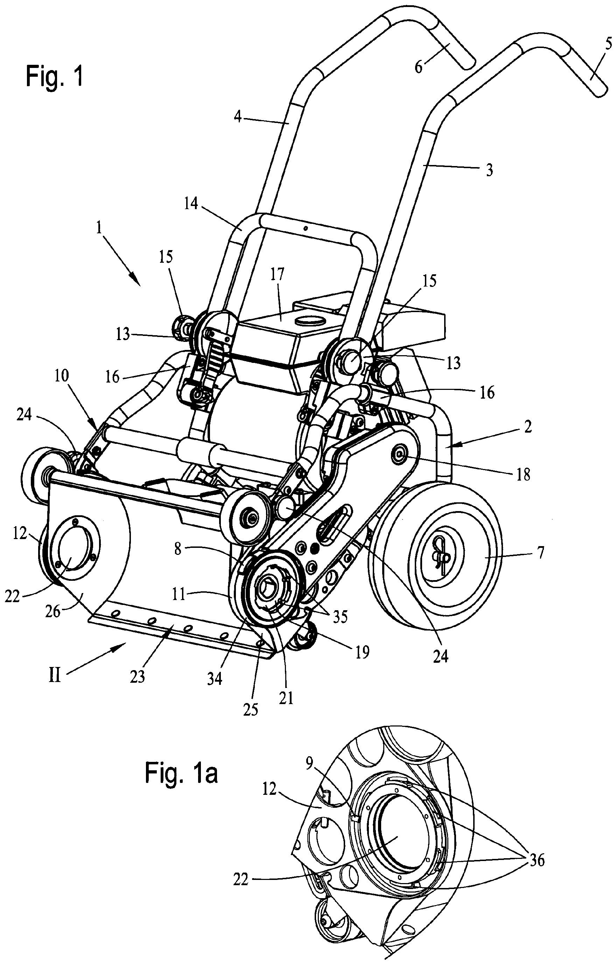

Fig. 1 zeigt ein Funktionsgerät 1, welches hier in prinzipieller Ausgestaltung beispielhaft perspektivisch dargestellt ist.

Dieses Funktionsgerät 1 weist in seinem hinteren Bereich ein Fahrgestell 2 auf. Dieses Fahrgestell 2 kann Teil eines Grundgestells 10 sein, in dessen hinterem Bereich beispielsweise zwei abgebogene Führungsstangen 3 und 4 befestigt sind, welche im oberen Endbereich jeweils einen Handgriff 5 bzw. 6 bilden. Im unteren, hinteren Endbereich sind am Fahrgestell 2 zwei Räder 7 angeordnet, von welchen in Fig. 1 lediglich eines sichtbar ist. Des Weiteren weist das Grundgestell 10 in seinem vorderen Endbereich zwei seitlich angeordnete, vertikal ausgerichtete Montageplatten 11 und 12 auf. Diese Montageplatten 11 und 12 sind am Grundgestell 10 feststehend montiert und können abnehmbar ausgebildet sein. Das Grundgestell 10 ist über entsprechende Halteeinrichtungen 13 mit den unteren Endbereichen der Führungsstangen 3 und 4 verbunden, wobei die Führungsstangen über die Halteeinrichtungen 13 schwenkbar am Grundgestell 10 gelagert sein können.

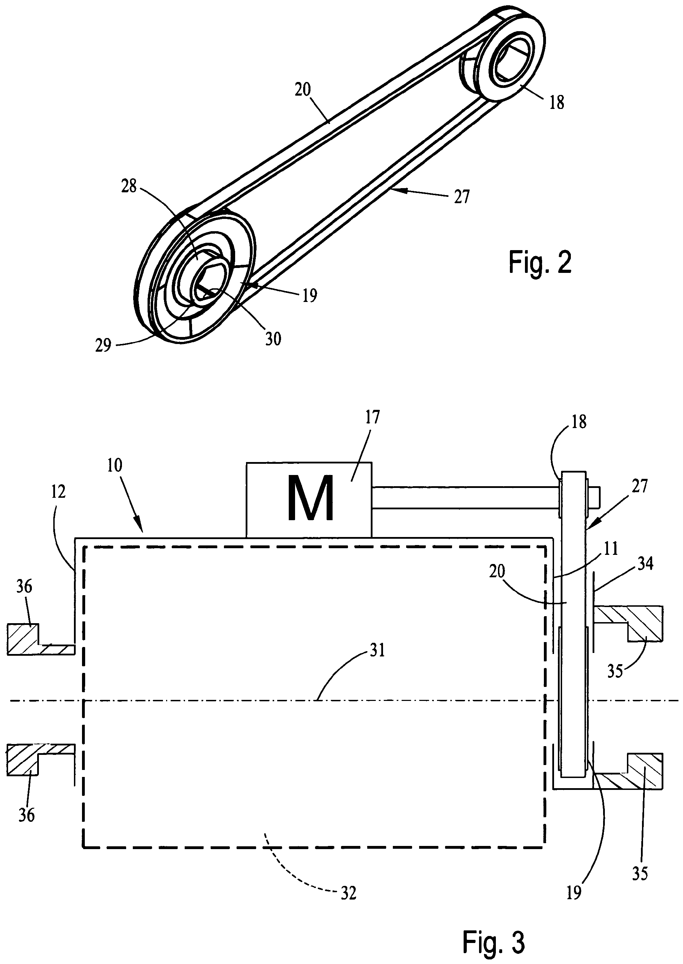

Zur Versteifung des Funktionsgerätes 1 ist beim vorliegenden Ausführungsbeispiel ein Aussteifungsbügel 14 vorgesehen, welcher einerseits mit den beiden Führungsstangen 3 und 4 über entsprechende Halteschrauben 15 und andererseits über Befestigungseinrichtungen 16 mit dem Grundgestell 10 feststehend gekoppelt ist. Des Weiteren ist im Grundgestell 10 beim vorliegenden Ausführungsbeispiel ein Verbrennungsmotor 17 vorgesehen, welcher außenseitig eine Keilriemenscheibe 18 (siehe auch Fig. 2) aufweist, von welcher in Fig. 1 lediglich die zugehörige Antriebsachse erkennbar ist.

Diese Keilriemenscheibe 18 steht mit einer zweiten Antriebsscheibe 19 über einen Keilriemen 20 (Fig. 2) in Verbindung, welche zusammen einen Primärantrieb in Form eines Riementriebes 27 bilden. Diese Antriebsscheibe 19 dient zum Antrieb einer Antriebswelle (in der Zeichnung nicht dargestellt), deren genauere Ausgestaltung später noch näher erläutert wird. Wie aus Fig. 1 erkennbar ist, ist die Antriebsscheibe 19 zwischen der Montageplatte 11 und einer Lagerplatte 34 drehbar gelagert aufgenommen.

Im Bereich der rechten "hinteren" Montageplatte 12 ist ein Durchbruch 22 vorgesehen. Im Bereich dieses Durchbruches 22 können außenseitig an der Montageplatte 12 wahlweise unterschiedliche Lagermodule befestigt werden. Auch im Bereich der Antriebsscheibe 19 können außenseitig an einer Lagerplatte 34 wahlweise unterschiedliche Lagermodule austauschbar befestigt werden, über welche eine Drehmomentübertragung auf eine in Fig. 1 nicht dargestellte Antriebswelle erfolgt. Ein solches Lagermodul ist einerseits mit der Antriebsscheibe 19 und andererseits mit einer in Fig. 1 nicht dargestellten Antriebswelle lösbar und drehfest koppelbar. Zur auswechselbaren Montage eines solchen Lagermoduls an der Lagerplatte 34 ist die Lagerplatte 34 im Umgebungsbereich der Antriebsscheibe 19 umlaufend mit mehreren Arretiervorrichtungen 35 versehen, welche mit Arretiervorrichtungen eines Lagermoduls nach Art einer Bajonettverbindung zusammenwirken. Anstatt einer solchen bajonettartigen "Schnellverbindung" könnte auch eine Rastverbindung oder dgl. vorgesehen sein. Zur Sicherung der verriegelten Position einer solchen Bajonettverbindung kann eine Sperrraste 8 vorgesehen sein, welche in der Lagerplatte 34 axial verstellbar aufgenommen und in Fig. 1 andeutungsweise erkennbar ist. Weiter ist aus Fig. 1 erkennbar, dass die Lagerplatte 34 im Bereich der Arretiervorrichtungen 35 einen Durchbruch 21 aufweist, durch welchen hindurch die Antriebsscheibe 19 zugänglich ist.

Wie aus der perspektivischen "Außenansicht" der Montageplatte 12 der Fig. 1a ersichtlich ist, weist die Montageplatte 12 im Umgebungsbereich ihres Durchbruches 22 ebenfalls mehrere umlaufend angeordnete Arretiervorrichtungen 36 auf, welche mit Arretiervorrichtungen eines Lagermoduls nach Art einer Bajonettverbindung zusammenwirken. Zur Sicherung der verriegelten Position einer solchen Bajonettverbindung kann eine Sperrraste 9 vorgesehen sein, welche in der Montageplatte 12 radial verstellbar aufgenommen ist.

Des Weiteren weist das Funktionsgerät 1 ein Gehäuse 23 auf, welches im Bereich der Antriebsscheibe 19 sowie des Durchbruches 22 an den beiden Montageplatten 11 und 12 schwenkbar bzw. drehbar gelagert ist. In der dargestellten Betriebsstellung wird das Gehäuse 23 durch zwei Sicherungsbolzen 24 fixiert.

Des Weiteren ist aus Fig. 1 ersichtlich, dass das Gehäuse 23 zwei Seitenwände 25 und 26 aufweist, über welche das Gehäuse 23 um eine parallel zur Drehachse der Antriebsscheibe 19 verlaufende Drehachse drehbar zwischen den Montageplatten 11 und 12 aufgenommen ist. Die Antriebsscheibe 19 ist bei der dargestellten Ausführungsvariante zwischen der Montageplatte 11 und der Lagerplatte 34 drehbar gelagert.

An dieser Stelle sei bemerkt, dass die Grundkonstruktion des Funktionsgerätes 1 auch beliebig anders ausgebildet sein kann. Erfindungswesentlich ist die Ausgestaltung der nachfolgend näher beschriebenen Bauteile des Antriebssystems.

Fig. 2 zeigt eine perspektivische Darstellung des aus der Keilriemenscheibe 18, dem Keilriemen 20 und der Antriebsscheibe 19 gebildeten Riementriebes 27. Wie aus Fig. 2 ersichtlich ist, weist die Antriebsscheibe 19 eine Lagernabe 28 auf, welche zur drehbaren Lagerung der Antriebsscheibe 19 an der Montageplatte 11 bzw. der Lagerplatte 34 des Funktionsgerätes 1 aus Fig. 1 dient. Im Bereich dieser Lagernabe 28 weist die Antriebsscheibe 19 einen zentralen Durchbruch 29 auf, welcher zur Drehmomentkopplung mit einer Antriebswelle mit einem Innenprofil 30 versehen ist.

Fig. 3 zeigt eine schematische Frontansicht II des Grundgestells 10 mit seinen beiden Montageplatten 11 und 12 aus Fig. 1. Dieses Grundgestell 10 kann aus einem Einzelgehäuse mit den seitlichen Montageplatten oder auch als Rohrrahmen mit den zwei Montageplatten 11 und 12 ausgebildet sein. Weiter ist in Fig. 3 die Drehachse 31 eines zwischen die beiden Montageplatten 11 und 12 einsetzbaren Arbeitsgerätes dargestellt, wobei das Arbeitsgerät bzw. der Arbeitsraum für ein solches Arbeitsgerät hier in gestrichelten Linien 32 angedeutet ist. Weiter ist in Fig. 3 der auf dem Grundgestell 10 angeordnete Antriebsmotor 17 erkennbar, welcher nachfolgend mit dem Buchstaben **M** gekennzeichnet ist.

Der Antriebsmotor **M** ist über eine Antriebswelle drehfest mit der Keilriemenscheibe 18 verbunden, welche ihrerseits die Antriebsscheibe 19 über den Keilriemen 20 drehend antreibt. Zwischen dem Antriebsmotor **M** und dem Riementrieb 27 bzw. der Antriebsscheibe 19 kann ein in der Zeichnung nicht dargestellter Kupplungsmechanismus vorgesehen sein, welcher zum Ein- und Ausschalten der Drehmomentübertragung dient. Eine solche schaltbare Kupplung kann auch integraler Bestandteil des Riementriebes 27 bzw. seiner Keilriemenscheibe 18 oder der Antriebsscheibe 19 sein. Des Weiteren sei angemerkt, dass anstatt eines Riementriebes auch ein Kettentrieb oder auch jede andere geeignete Vorrichtung zum Antrieb der Antriebsscheibe 19 vorgesehen sein kann.

Weiter ist aus Fig. 3 schematisch erkennbar, dass die Lagerplatte 34 außenseitig im Bereich der Antriebsscheibe 19 axial nach außen und radial nach innen gerichtete Arretiervorrichtungen 35 aufweist. Diese Arretiervorrichtungen 35 wirken mit entsprechend an einem Lagermodul angeordneten Arretiervorrichtungen beispielsweise nach Art eines Bajonettverschlusses formschlüssig zusammen, so dass ein solches Lagermodul in einfacher Weise arretierbar und abnehmbar auf die Lagerplatte 34 aufsetzbar ist. Zur Sicherung des Bajonettverschlusses kann eine in der Zeichnung nicht dargestellte Sperrraste dienen, welche im Bereich der Montageplatte 11 oder im Bereich der Lagerplatte 34 vorgesehen ist und das Lagermodul gegen unbeabsichtigtes Verdrehen aus der verriegelten Drehposition in eine gelöste Drehposition des Bajonettverschlusses sichert.

In gleicher Weise weist auch die Montageplatte 12 axial und radial nach außen gerichtete Arretiervorrichtungen 36 auf, welche ebenfalls nach Art eines Bajonettverschlusses mit entsprechend an einem Lagermodul angeordneten Arretiervorrichtungen formschlüssig zusammenwirken, so dass auch an der Montageplatte 12 ein solches Lagermodul in einfacher Weise arretier- und abnehmbar auf die Montageplatte 12 aufsetzbar ist. Auch ist im Bereich der Lagerplatte 12 eine in der Zeichnung nicht weiter dargestellte Sperrraste angeordnet, welche das Lagermodul gegen unbeabsichtigtes Verdrehen aus der verriegelten Drehposition in eine gelöste Drehposition des Bajonettverschlusses sichert.

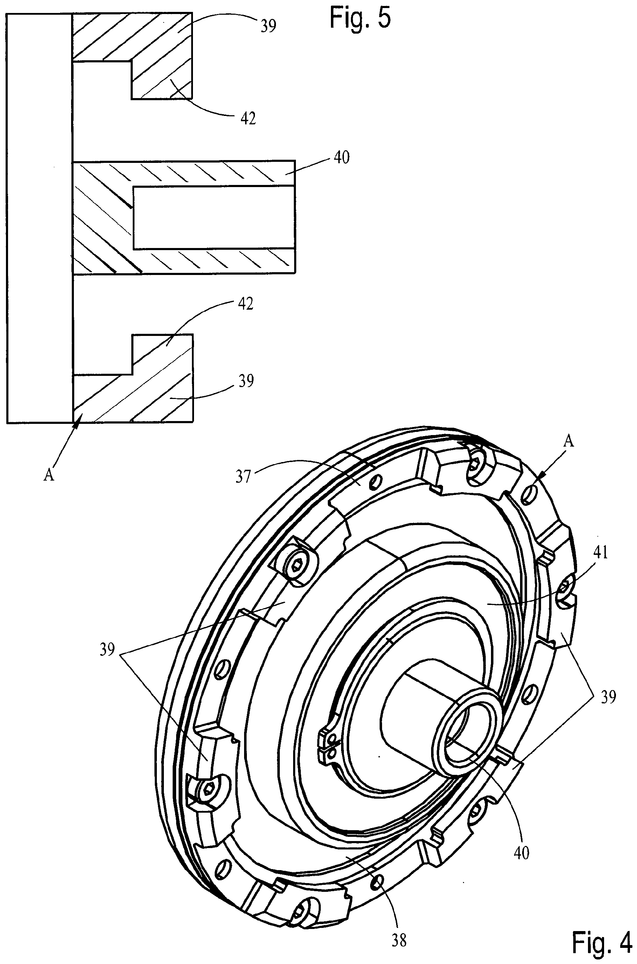

Fig. 4 zeigt beispielhaft ein Lagermodul **A,** welches am Außenrand 37 eines Modulflansches 38 die oben zur Montageplatte 12 erwähnten Arretierungsvorrichtungen 39 des Lagermoduls **A** aufweist. In der Mitte des Lagermoduls **A** befindet sich eine drehbare Aufnahmebuchse 40, welche zur Aufnahme und Lagerung einer Antriebswelle dient. Zur drehbaren Lagerung der Aufnahmebuchse 40 ist im Modulflansch 38 ein entsprechendes Wälzlager 41 vorgesehen.

Wie die vereinfachte Schnittdarstellung der Fig. 5 zeigt, weisen die Arretiervorrichtungen 39 radial nach innen gerichtete Sperrnasen 42 auf, welche nach Art eines Bajonettverschlusses mit den radial nach außen gerichteten Arretiervorrichtungen 36 der Montageplatte 12 aus Fig. 3 lösbar in Eingriff bringbar sind. Auch ist die Aufnahmebuchse 40 erkennbar. Somit ist das Lagermodul A in einfacher Weise durch die Arretiervorrichtungen 36 und 39 an der Montageplatte 12 auswechselbar montierbar und dient zur einfachen, drehbaren Lagerung einer Antriebswelle eines Arbeitsgerätes.

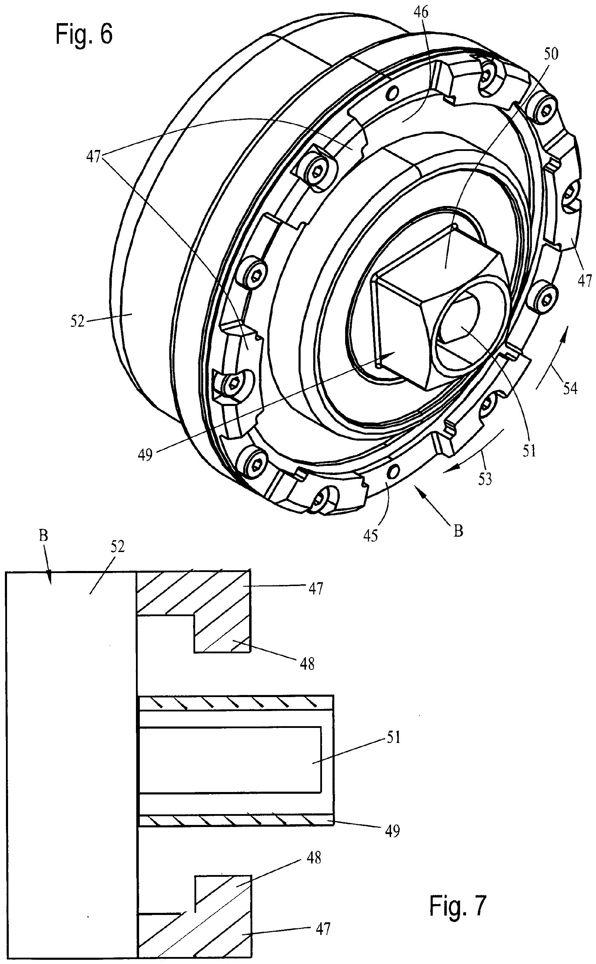

Alternativ zum Lagermodul A kann an der Montageplatte 12 auch das in den Fig. 6 und 7 dargestellte Lagermodul B eingesetzt werden. Das Lagermodul B weist am Außenrand 45 seines Modulflansches 46 ebenfalls Arretiervorrichtungen 47 auf. Auch diese Arretiervorrichtungen 47 weisen radial nach innen gerichtete Sperrnasen 48 auf, welche nach Art eines Bajonettverschlusses mit den radial nach außen gerichteten Arretiervorrichtungen 36 der Montageplatte 12 aus Fig. 3 lösbar in Eingriff bringbar sind. Diese Sperrnasen 48 sind der vereinfachten Schnittdarstellung des Lagermoduls B aus Fig. 7 entnehmbar. Somit kann das Lagermodul A in einfacher Weise durch diese bajonettartige Formschlussverbindung durch das Lagermodul B ersetzt werden.

Des Weiteren ist aus den Fig. 6 und 7 erkennbar, dass das Lagermodul **B** eine zentrale Kupplungshülse 49 aufweist, welche an ihrem Außenumfang einen Antriebsvierkant 50 bildet. In der Antriebshülse 49 ist ein konzentrisch zur Antriebshülse 49 angeordneter, profilierter Kupplungszapfen 51 vorgesehen. Die Antriebshülse 49 und der Kupplungszapfen 51 stehen mit einem in einem Getriebegehäuse 52 des Lagermoduls **B** angeordneten Getriebe (nicht dargestellt) in Wirkverbindung, welches beispielsweise als Planetengetriebe ausgebildet sein kann. Mittels dieses Getriebes kann beispielsweise eine Drehzahluntersetzung zwischen dem Kupplungszapfen 51 und der Antriebshülse 49 bewirkt werden und/oder eine Drehrichtungsumkehr. Wird beispielweise der Kupplungszapfen 51 in Richtung des Pfeils 53 drehend angetrieben, so kann durch das Getriebe eine Drehung der Antriebshülse 49 in Richtung des Pfeils 54 in entgegengesetzter Richtung bewirkt werden. Das im Getriebegehäuse 52 angeordnete Getriebe kann auch derart ausgebildet sein, dass die äußere Antriebshülse 49 ebenfalls in der gleichen Drehrichtung des Pfeils 53 jedoch mit anderer Drehzahl angetrieben wird wie der innere Kupplungszapfen 51.

Im Einsatz steht der auf der Antriebshülse 49 gebildete Antriebsvierkant 50 mit einer Antriebswelle in drehfester Verbindung, wobei die Antriebswelle durch die Antriebsscheibe 19 aus den Fig. 1 und 2 drehend angetrieben wird. Die Antriebswelle durchragt ein eingesetztes Arbeitsgerät und steht wiederum mit dem Kupplungszapfen 51 in drehfester Verbindung. Die Antriebshülse 49 steht ihrerseits wiederum über ihren Antriebsvierkant 50 mit dem Arbeitsgerät in drehfester Verbindung, so dass dieses demensprechend in entgegengesetzter Drehrichtung zur Antriebwelle angetrieben wird. Somit ist durch den Einsatz des Lagermoduls **B** in einfacher Weise eine Drehrichtungsumkehr bewirkbar.

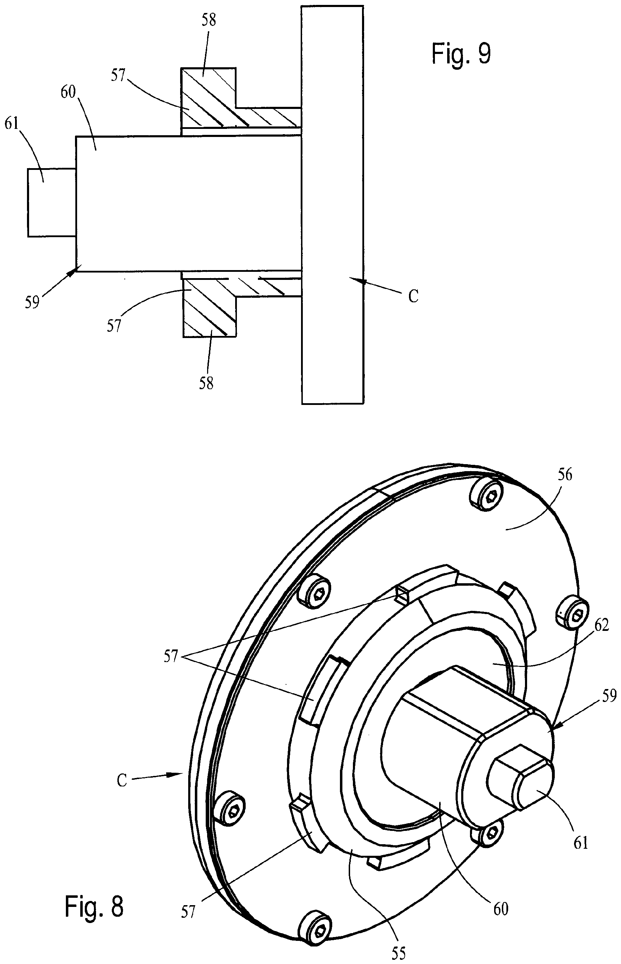

Die Fig. 8 und 9 zeigen ein Lagermodul **C**, welches im Zusammenwirken mit der Lagerplatte 34 und der Antriebsscheibe 19 aus den Fig. 1 und 2 einsetzbar ist. Das Lagermodul C weist am Innenrand 55 seines Modulflansches 56 radial nach außen gerichtete Arretiervorrichtungen 57 auf. Wie die vereinfachte Schnittdarstellung der Fig. 9 zeigt, bilden die Arretiervorrichtungen 57 radial nach außen gerichtete Sperrnasen 58, welche nach Art eines Bajonettverschlusses mit radial nach innen gerichteten Arretiervorrichtungen 35 der Lagerplatte 34 aus Fig. 3 lösbar in Eingriff bringbar sind. Das Lagermodul **C** weist einen zentralen Kupplungszapfen 59 auf. Der Kupplungszapfen 59 bildet zum Modulflansch 56 hin einen radial erweiterten Kupplungsabschnitt 60, welcher profiliert ausgebildet und drehfest mit dem Innenprofil 30 der Antriebsscheibe 19 aus Fig. 2 in Eingriff bringbar ist.

An diesen Kupplungsabschnitt 60 schließt sich in axialer Richtung zum freien Ende des Kupplungszapfens 59 hin ein radial verjüngt ausgebildeter Antriebszapfen 61 an, über welchen der Kupplungszapfen 59 drehfest mit einer Antriebswelle eines Arbeitsgerätes in Verbindung bringbar ist. Somit ist eine solche Antriebswelle über den Kupplungszapfen 59 und dessen Kupplungsabschnitt 60 und dessen Antriebsabschnitt 61 mit der Antriebsscheibe 19 aus den Fig. 1 und 2 in drehfeste Verbindung bringbar. Zur drehbaren Lagerung des Kupplungszapfens 59 im Modulflansch 56 kann auch hier ein Wälzlager 62 vorgesehen sein.

Somit ist auch das Lagermodul **C** in einfacher Weise durch die Arretiervorrichtungen 35 und 57 an der Lagerplatte 34 auswechselbar montierbar und dient zum einfachen, drehbaren Antrieb sowie zur Lagerung einer Antriebswelle eines Arbeitsgerätes.

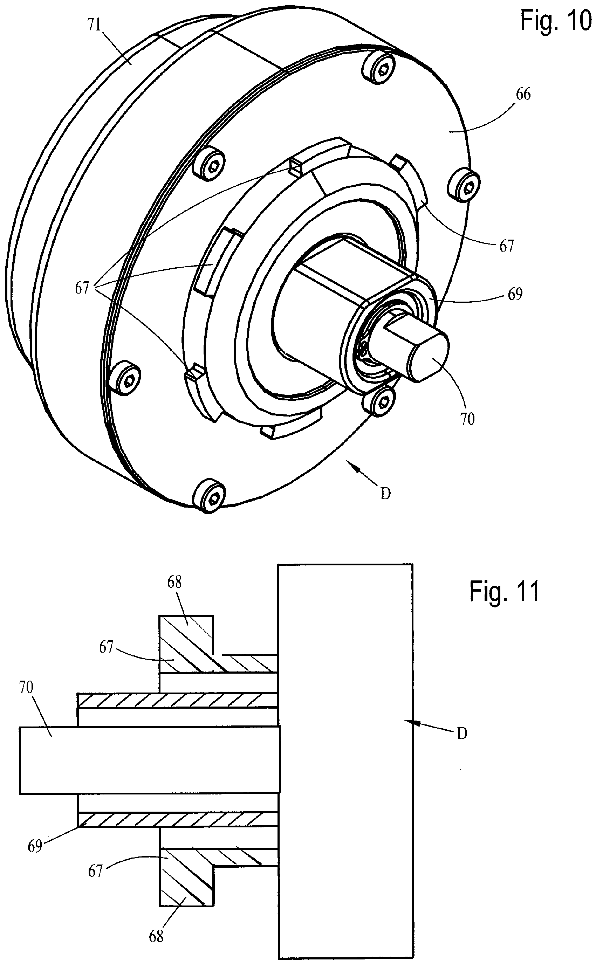

Die Fig. 10 und 11 zeigen eine weitere Ausführungsvariante eines Lagermoduls **D,** welches alternativ zum Lagermodul **C** einsetzbar ist. Dementsprechend weist auch das Lagermodul **D** im Bereich des Innenrandes seines Modulflansches 66 Arretiervorrichtungen 67 auf. Wie aus Fig. 11 erkennbar ist, bilden diese Arretiervorrichtungen 67 radial nach außen gerichtete Sperrnasen 68, welche ebenfalls nach Art eines Bajonettverschlusses mit den radial nach innen gerichteten Arretiervorrichtungen 35 der Lagerplatte 34 aus Fig. 3 lösbar in Eingriff bringbar sind.

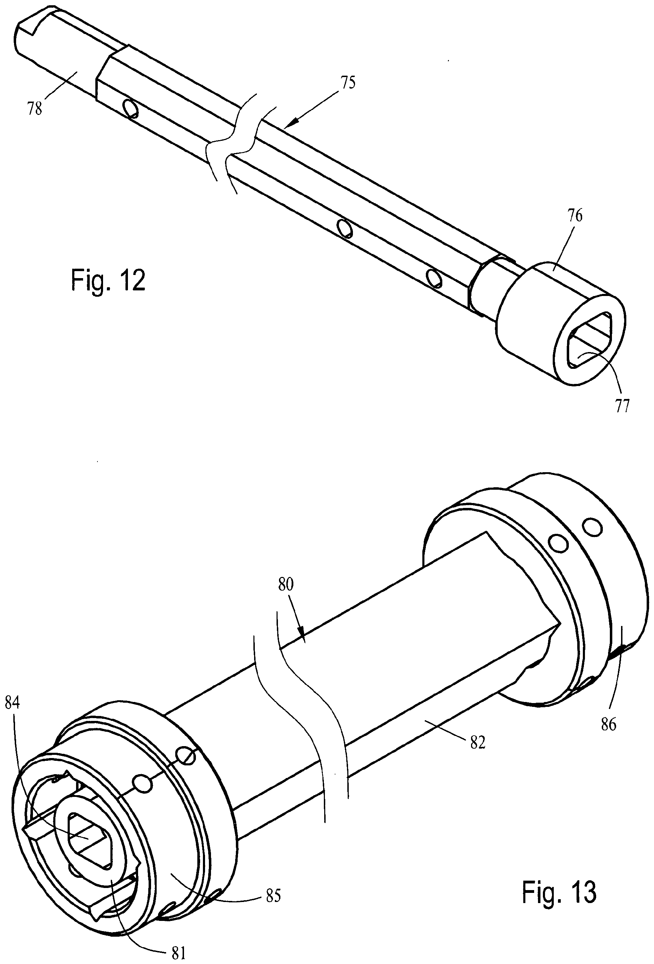

Mittig weist das Lagermodul **D** eine Kupplungshülse 69 auf, welche eine profilierte Außenfläche bildet, mit welcher die Kupplungshülse 69 drehfest mit dem Innenprofil 30 der Antriebsscheibe 19 aus den Fig. 1 und 2 in Eingriff bringbar ist. Konzentrisch zur Kupplungshülse 69 ist in dieser drehbar gelagert ein Antriebszapfen 70 angeordnet, welcher ebenfalls eine profilierte Außenfläche aufweist. Der Antriebszapfen 70 steht in axialer Richtung über die Kupplungshülse 69 hinaus und ist mit diesem Außenprofil mit einem entsprechenden Kupplungsprofil 77 einer Antriebwelle 75 (Fig. 12) drehfest in Verbindung bringbar.

Des Weiteren weist das Lagermodul **D** ein in einem Getriebegehäuse 71 angeordnetes Getriebe, beispielsweise in Form eines Planetengetriebes auf, über welches der Antriebszapfen 70 durch die Kupplungshülse 69 drehend antreibbar ist. Durch dieses in der Zeichnung nicht dargestellte Getriebe kann somit eine Untersetzung (oder auch Übersetzung) der Drehzahl zwischen der Kupplungshülse 69 und dem Antriebszapfen 70 und somit relativ zur Drehzahl der Antriebsscheibe 19 aus den Fig. 1 und 2 erreicht werden.

Insoweit kann die für eine gewählte Arbeitsaufgabe bei entsprechend eingesetztem Arbeitsgerät gewünschte Drehzahl eines Arbeitsgerätes durch einfaches Austauschen der Lagermodule **C** und **D** den Erfordernissen angepasst werden.

Werden "nur" die Lagermodule **C** oder **D** antriebsseitig im Bereich der Lagerplatte 34 eingesetzt und auf der gegenüber liegenden Seite der Montageplatte 12 "nur" das Lagermodul **A,** so kommt eine in Fig. 12 verkürzt dargestellt Antriebswelle 75 zum Einsatz. Die Antriebswelle 75 weist in ihrem einen Endbereich eine hülsenförmige Zapfenkupplung 76 auf, welche mit einem Innenprofil 77 versehen ist. Mit diesem Innenprofil 77 ist die Antriebswelle 75 - je nach eingesetztem Lagermodul **C** oder **D** - mit dem Antriebszapfen 61 oder mit dem Antriebszapfen 70 drehfest in Verbindung bringbar.

In ihrem gegenüber liegenden Endbereich weist die Antriebswelle 75 einen "einfachen", zylindrischen Lagerzapfen 78 auf, auf welchen die Aufnahmebuchse 40 des Lagermoduls **A** bei der Montage an der Montageplatte 12 einfach aufsteckbar ist. Die Antriebswelle 75 kann dabei integraler Bestanteil eines Arbeitsgerätes sein.

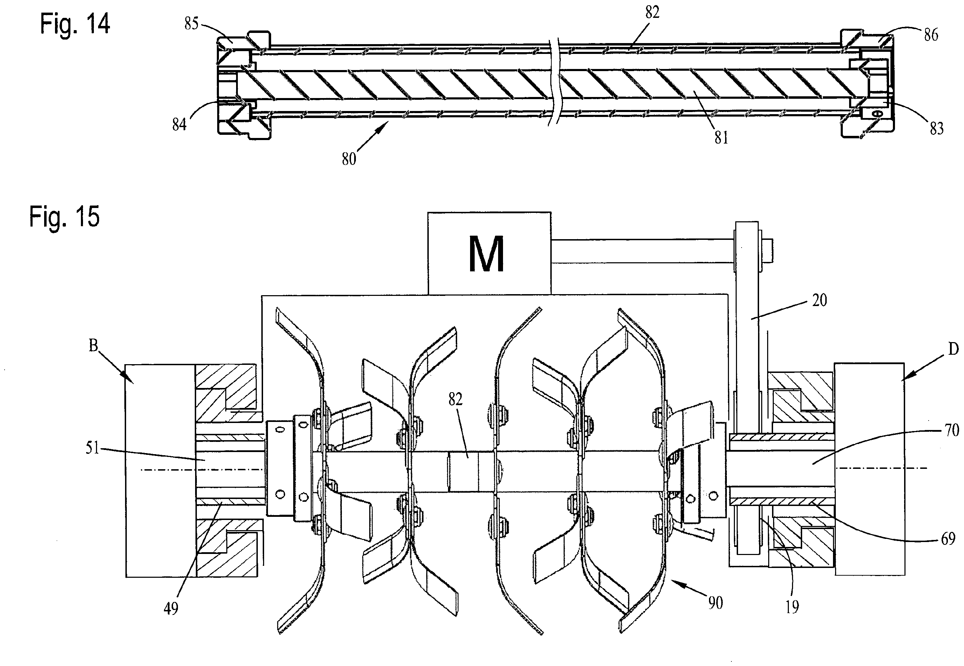

Wird zum Antrieb eines Arbeitsgerätes auf Seiten der Montagplatte 12 das Lagermodul **B** verwendet, so ist eine Doppelantriebswelle 80 einzusetzen, wie diese beispielhaft in Fig. 13 in verkürzter Perspektive und in Fig. 14 im Schnitt dargestellt ist. Diese Doppelantriebswelle 80 besteht aus einer inneren, durchgehenden Zentralwelle 81, welche in einer äußeren Hohlwelle 82 drehbar gelagert ist.

Die Zentralwelle 81 ist in ihren beiden Endbereichen jeweils mit einer Zapfenkupplung 83 bzw. 84 (Fig. 14) versehen, deren Innenprofile dem jeweiligen Außenprofil der Antriebszapfen 61, 70 bzw. des Kupplungszapfens 51 derart angepasst sind, dass die Zapfenkupplung 83 drehfest mit dem Antriebszapfen 61 oder 70 bzw. die Zapfenkupplung 84 mit dem Kupplungszapfen 51 zusammensteckbar sind.

In zumindest einem Endbereich des Kupplungsprofils 84 weist die Hohlwelle 82 eine Hülsenkupplung 85 bzw. 86 auf, welche mit dem Antriebsvierkant 50 der Kupplungshülse 49 des Lagermoduls **B** aus Fig. 6 drehfest in Eingriff bringbar ist. Dementsprechend ist auch das Innenprofil der Hülsenkupplung 85 bzw. 86 passend auf den Antriebsvierkant 50 angepasst. Somit ist ein in die Zentralwelle 81 eingeleitetes Drehmoment über die Zapfenkupplung 84 und das Lagermodul **B** über deren Kupplungshülse 49 auf ein beispielsweise auf der Hohlwelle 82 feststehend angeordnetes Arbeitsgerät übertragbar. Auch kann im zweiten Endbereich der Hohlwelle 82 eine solche Hülsenkupplung 86 vorgesehen sein, so dass die Doppelwelle 80 auch in unterschiedlicher axialer Orientierung einsetzbar ist.

Hierzu zeigen die Fig. 15 bis 18 beispielhaft einige Anwendungsbeispiele des erfindungsgemäßen Antriebssystems.

In Fig. 15 ist die Arbeitskonfiguration eines Bodenhackers 90 dargestellt, wobei dessen Hackensatz 90 aus Pflügersätzen besteht, welche direkt auf die Hohlwelle 82 und senkrecht zu deren Wellenachse fest montiert werden. Die Hohlwelle 82 nimmt das Drehmoment von der Kupplungshülse 49 des Lagermoduls **B** auf, dessen Kupplungszapfen 51 vom Antriebszapfen 70 des Lagermoduls **D** über die Zentralwelle (in Fig. 15 nicht sichtbar) angetrieben wird. Die Kupplungshülse 69 des Lagermoduls **D** wird wiederum von der Antriebsscheibe 19 über den Keilriemen 20 angetrieben. Da beim Bodenhacken ein hohes Drehmoment benötigt wird, ist die entsprechende Abstufung der Motordrehzahl bzw. die Erhöhung des Drehmoments durch die mehrstufigen Untersetzungen erforderlich. Außerdem ist das hohe Gewicht, welches aus den zwei Lagermodulen **B** und **D** zustande kommt, auf Grund der Grabfunktion ein sehr gewünschtes Merkmal.

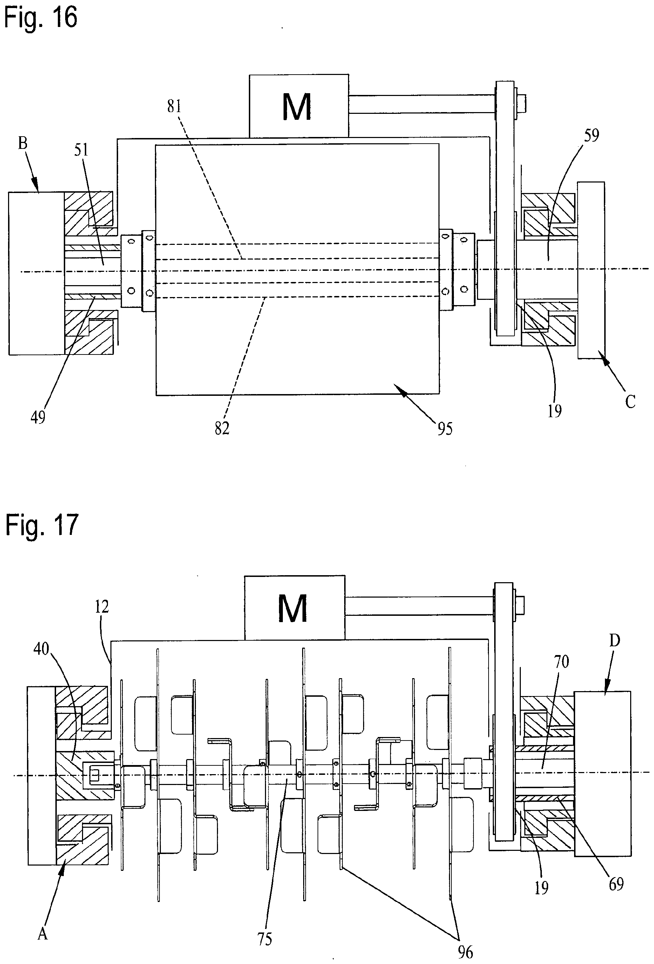

Fig. 16 zeigt eine Arbeitskonfiguration eines Kehrgerätes, wobei eine Kehrwalze 95 das erforderliche Drehmoment direkt von der Hohlwelle 82 aufnimmt. Die Hohlwelle 82 wird durch das Getriebe des Lagermoduls **B** über die Kupplungshülse 49 drehend angetrieben, wobei das Getriebe wiederum über die Zentralwelle 81 angetrieben wird, welche mit dem Kupplungszapfen 51 des Lagermoduls **B** in Verbindung steht. Die Zentralwelle 81 steht mit dem Kupplungszapfen 59 des Lagermoduls **C** in drehfester Verbindung, welcher wiederum durch die Antriebsscheibe 19 drehend angetrieben wird. Da für diese Arbeitskonfiguration als Kehrgerät "antriebsseitig" das Lagermodul **C** eingesetzt wird, wird die Kehrwalze 95 mit einer relativ hohen Drehzahl und in Drehrichtung der Kehrrichtung entsprechend angetrieben.

In Fig. 17 ist die Arbeitskonfiguration eines Rasenlüfters dargestellt. Hier kommt die Antriebswelle 75 aus Fig. 12 zum Einsatz, welche die Lüfterelemente 96 direkt aufnimmt. Antriebsseitig ist das Lagermodul **D** vorgesehen, welches die Antriebswelle 75 über den Antriebszapfen 70 drehend antreibt. Das Lagermodul **D** wird wiederum durch die Antriebsscheibe 19 über die Kupplungshülse 69 angetrieben. Somit wird der Rasenlüfter 96 auf Grund des Einsatzes des Lagermoduls **D** mit anderer Drehzahl und/oder Drehrichtung angetrieben als die Kehrwalze 95 aus Fig. 16. Auf der linken Seite wird die Antriebswelle 75 über das Lagermodul **A** aus den Fig. 4 und 5 an der Montageplatte 12 drehbar gelagert und steht dementsprechend mit dessen Aufnahmebuchse 40 in Verbindung.

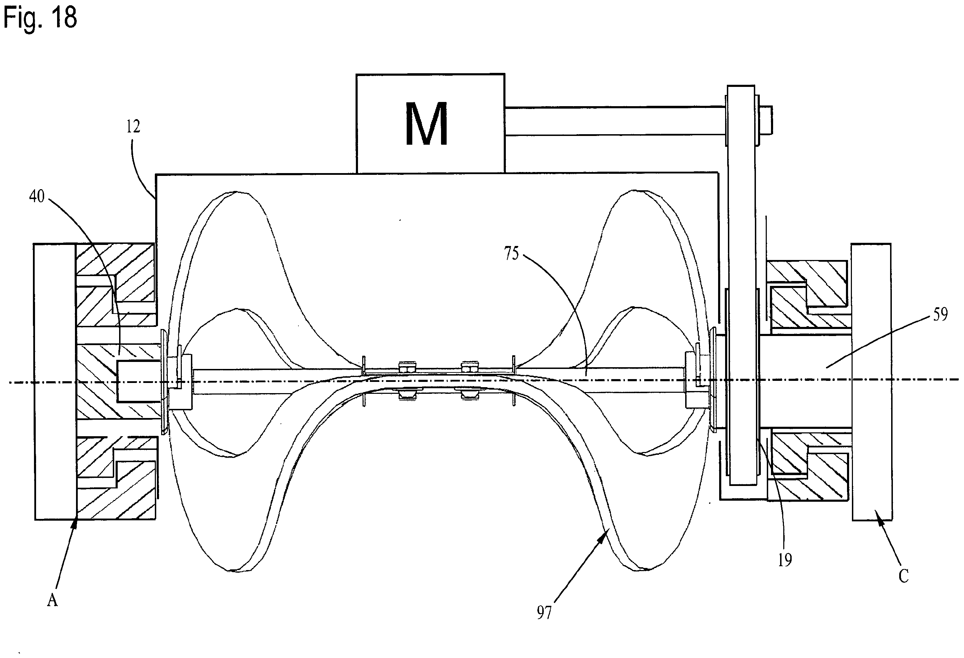

Fig. 18 zeigt das Antriebssystem im Einsatz zum Antrieb einer Fräswalze 97 einer Schneefräse. Die Fräswalze 97 ist vorliegend direkt auf der Antriebswelle 75 montiert. Da das Lagermodul **C** keine Getriebeeinheit (wie die Lagermodule **B** und **D**) aufweist, wird die Antriebswelle 75 durch den Kupplungszapfen 59 des Lagermoduls **C** mit hoher Drehzahl angetrieben, wobei der Kupplungszapfen 59 wiederum durch die Antriebsscheibe 19 drehend angetrieben wird. Die Antriebswelle 75 ist bei dieser Arbeitskonfiguration im Bereich der Montageplatte 12 an dieser über das Lagermodul **A** bzw. dessen Aufnahmebuchse 40 frei drehbar gelagert.

Es ist erkennbar, dass auf Grund des erfindungsgemäßen Antriebssystems mit seinen verschiedenen Lagermodulen **A, B, C** und **D** sowie der Antriebswelle 75 und der Doppelwelle 80 das Funktionsgerät 1 aus Fig. 1 in äußerst einfacher Weise umrüstbar und der jeweils gestellten Arbeitsfunktion anpassbar ist. Insbesondere die einfache Austauschbarkeit der Lagermodule **A** bis **D** an der Montageplatte 12 bzw. der Lagerplatte 34 durch die vorgesehenen Bajonettverbindungen ermöglichen eine äußerst einfache Handhabung. Die Antriebswelle 75 und die Doppelwelle 80 sind dabei vorzugsweise integraler Bestandteil des jeweiligen Arbeitsgerätes, so dass es keiner zusätzlichen Umrüstung bedarf.

Zur Montage eines bestimmten Arbeitsgerätes wird vorzugsweise zunächst antriebsseitig eines der zugehörigen Lagermodule auf die Lagerplatte 34 aufgesetzt und gleichzeitig mit der Antriebsscheibe 19 drehfest in Verbindung gebracht. Anschließend wird das Arbeitsgerät eingesetzt. Das Arbeitsgerät muss nun nur noch auf den Durchbruch 22 der Montageplatte ausgerichtet werden, so dass anschließend außenseitig auf die Montageplatte 12 das zweite Lagermodul aufgesetzt wird. Beim Aufsetzen des zweiten Lagermoduls gelangt dieses zwangläufig mit dem zweiten Ende der Antriebswelle (oder Doppelwelle) in Eingriff. Soll nun beispielsweise die Drehzahl verändert werden, so muss lediglich - je nach Bestückung - eines der Lagermodule - beispielsweise das antriebsseitige - Lagermodul ausgetauscht werden, ohne dass es notwendig wäre, das Arbeitsgerät auszubauen.

## Patentansprüche

1. Antriebssystem für ein motorisch betriebenes Funktionsgerät (1), welches als Multifunktions- oder Kombinationsgerät zur Boden- und Rasenbearbeitung wie Vertikutieren, Lüften, Hacken, Rasenmähen, Walzen, Verdichten, Kantenschneiden, oder Räumungsarbeit wie Schneefräsen, Kehren, oder zum Notdienst wie Wasserpumpen, Stromversorgung oder dergleichen dienen kann, bestehend aus einem Primärantrieb (27), zwei an einem Grundgestell (10) des Funktionsgeräts (1) angeordneten Lagermodulen (**A**, **B**, **C**, **D**), und einer über die Lagermodule (**A**, **B, C, D**) am Grundgestell (10) drehend gelagerten Antriebswelle (75, 80), auf welcher das jeweilige Arbeitsgerät (90, 95, 96, 97) drehfest angeordnet ist, wobei das Grundgestell (10) zur Aufnahme der Lagermodule (**A**, **B, C, D**) zwei seitlich beabstandete Montage- oder Lagerplatten (11, 12, 34) aufweist, welche senkrecht zur Drehachse (31) des eingesetzten Arbeitsgerätes (90, 95, 96, 97) verlaufen,
**dadurch gekennzeichnet,**
**dass** die Lagermodule (**A**, **B, C, D**) als separate Baueinheiten ausgebildet sind, welche wahlweise mit einer der Montage- oder Lagerplatten (11, 12, 34) über Schnellverschlüsse gegeneinander austauschbar koppelbar sind, und
**dass** die für die jeweilige Arbeitsaufgabe erforderlichen Drehzahlbereiche und Drehrichtungen für die jeweiligen Arbeitsgeräte (90, 95, 96, 97) durch die Auswahl unterschiedlicher Kombinationen von Lagermodulen (**A**, **B, C, D**) und mit dem jeweiligen Arbeitsgerät (90, 95, 96, 97) in drehfester Verbindung stehenden Antriebswellen (75, 80) erfolgt.

2. Antriebssystem nach Anspruch 1, **dadurch gekennzeichnet**, der Primärantrieb (27) eine im Bereich der einen Montage- oder Lagerplatte (11, 34) drehbar gelagerte Antriebsscheibe (19) aufweist, welche ein Kupplungselement (60, 69) eines antriebseitig wahlweise an der Montage- oder Lagerplatte (11, 34) angeordneten Lagermoduls (**C** oder **D**) drehend antreibt und,
dass das Kupplungselement (60, 69) direkt oder über ein Getriebe einen mit der Antriebswelle (75, 80) in drehfester Verbindung stehenden Antriebszapfen (61, 70) drehend antreibt.

3. Antriebssystem nach Anspruch 2, **dadurch gekennzeichnet, dass** das an der anderen Montageplatte (12) angeordnete Lagermodul (**A**, **B**) zur Aufnahme der Antriebswelle (75, 80) eine Aufnahmebuchse (40) oder einen Kupplungszapfen (51) aufweist, welcher im Lagermodul (**A**, **B**) drehbar gelagert ist.

4. Antriebssystem nach Anspruch 3, **dadurch gekennzeichnet, dass** als Antriebswelle eine Doppelantriebswelle (80) mit einer äußeren Hohlwelle (82) und einer inneren Zentralwelle (81) vorgesehen ist, und
dass die Zentralwelle über eines der antriebsseitig vorgesehenen ersten Lagermodule (C, D) drehend antreibbar ist, und dass die Zentralwelle (81) mit ihrem anderen Ende einen inneren Kupplungszapfen (51) eines axial dem ersten Lagermodul gegenüber liegend angeordneten Lagermoduls (**B**) drehend antreibt, und
dass der Kupplungszapfen (51) über ein Getriebe eine konzentrisch zum Kupplungszapfen (51) angeordnete, mit der Hohlwelle (82) in drehfester Verbindung stehende Kupplungshülse (49) in gleicher oder entgegengesetzter Drehrichtung antreibt.

5. Antriebssystem nach Anspruch 2 oder 4, **dadurch gekennzeichnet, dass** das die Getriebe als Planetengetriebe ausgebildet sind.

6. Antriebssystem nach einem der Ansprüche 1 bis 5, **dadurch gekennzeichnet, dass** die Schnellverschlüsse zur austauschbaren Montage der Lagermodule (**A**, **B, C, D**) an einer der Montage- oder Lagerplatten (11, 12, 34) als bajonettveschlussartig miteinander in Eingriff bringbare Arretiervorrichtungen (35, 36, 39, 47, 57, 67) ausgebildet sind, welche einerseits an der Montageplatte (12) bzw. an der Lagerplatte (34) und andererseits am jeweiligen Lagermodul (**A**, **B, C**, **D**) angeordnet sind.

7. Antriebssystem nach Anspruch 6, **dadurch gekennzeichnet, dass** die Schnellverschlüsse (35, 36, 39, 47, 57, 67) mittels einer lösbaren Sperrraste (8, 9) gegen selbständiges Lösen gesichert sind.

8. Antriebssystem nach Anspruch 2, **dadurch gekennzeichnet, dass** der Primärantrieb als Riementrieb (27) oder wahlweise als Kettentrieb ausgebildet ist.

9. Antriebssystem nach einem der Ansprüche 1 bis 8, **dadurch gekennzeichnet, dass** als Arbeitsgeräte Vertikutierer, Lüfter, Hackensatz, Spindelmähersatz, Walze, Verdichtungsplatte, Kantenschneidmesser, Schneeauswurfbogen, Kehrwalze, Wasserpumpe, Stromerzeugungsaggregat oder dgl. antreibbar sind.

## Claims

1. A drive system for a motorized functional device (1), which can be used as a multi-function or combination device for soil working or turf care such as scarifying, aerating, tilling, grass mowing, rolling, compacting, edge trimming, or cleaning work such as snow blowing, sweeping, or for emergency service such as water pumping, power supply, or the like, comprising a primary drive (27), two bearing modules (**A**, **B**, **C**, **D**) coupled to the base frame (10) of the said functional device (1), and a drive shaft (75, 80) rotatably fixed with the respective work implement (90, 95, 96, 97) and connected to the said bearing modules (**A**, **B**, **C**, D) on the said base frame (10), whereby the said base frame (10) has for accommodating the said bearing modules (**A**, **B**, **C**, **D**) two mounting or bearing side plates (11, 12, 34) that are laterally spaced apart and perpendicular with respect to the rotational axis (31) of the said work implement (90, 95, 96, 97) in use, **characterized in**
**that** the said bearing modules (**A**, **B**, **C**, **D**) are designed as separate units which can be interchanged at will and coupled to one of the said mounting or bearing side plates (11, 12, 34) via quick-release mechanisms, and
**that** the speed ranges and directions of rotation as required for the respective work tasks with the respective said work implements (90, 95, 96, 97) are set by selecting different combinations of the said bearing modules (**A**, **B**, **C**, **D**) and said drive shafts (75, 80) rotatably fixed with the respective said work implement (90, 95, 96, 97).

2. A drive system according to claim **1**, wherein the said primary drive (27) comprises a drive pulley (19) rotatably mounted onto one of the said mounting or bearing side plates (11, 34), which rotates the coupling element (60, 69) on one of the said bearing modules (C or D) being selectively coupled to the said mounting or bearing side plate (11, 34) and,
the said coupling element (60, 69) rotates directly or via gear transmission one of the coupling studs (61, 70) being rotatably connected to the drive shafts (75, 80).

3. A drive system according to claim **2**, wherein the other said bearing modules (**A**, **B**) as coupled to the said mounting or bearing side plate (12) for taking up the said drive shafts (75, 80) comprise a spindle socket (40) or a coupling stud (51) which is rotatably journaled to the said bearing modules (**A**, **B**).

4. A drive system according to claim **3**, wherein one of the said drive shaft (80) has a double shaft configuration in the form of a hollow external shaft (82) and an inner central shaft (81) wherein
the said inner central shaft (81) is at one end driven by one of the first said bearing modules (**C**, **D**), and
the other end of the said inner central shaft (81) rotates the said coupling stud (51) of the said bearing module (**B**) that lies axially opposite to the first said bearing module, and the said coupling stud (51) rotates the coupling socket (49), being coaxial to the said coupling stud (51) and rotatably connected to the said hollow external shaft (82), in the same or opposite direction by means of a gear transmission.

5. A drive system according to claim **2** or **4**, wherein the said gear transmission takes the form of a planetary or epi-cyclic gear train.

6. A drive system according to claims **1** to **5**, wherein the said quick release mechanisms for interchanging the said bearing modules (**A**, **B, C**, **D**) on the said mounting or bearing side plates (11, 12, 34) comprise interlocking elements (35, 36, 39, 47, 57, 67) that function like a bayonet coupling with one side being attached to the said mounting side plate (12) or the said bearing side plate (34) and the other side being attached to each of the said bearing modules (**A**, **B, C**, **D**).

7. A drive system according to claim **6**, wherein the said quick release interlocking elements (35, 36, 39, 47, 57, 67) are prevented from self release by means of a safety latch (8,9).

8. A drive system according to claim **2**, wherein the said primary drive (27) may take the form of a belt transmission or a chain transmission.

9. A drive system according to claims **1** to **8**, wherein the said work implement to be driven can be a scarifying unit, an aerating unit, a tilling set, a reel mowing set, a rolling unit, a compacting unit, an edge trimming unit, a snow blowing unit, a sweeping roller, a water pump, an electricity generating unit or similar devices.

## Revendications

1. Système d'entraînement pour un dispositif fonctionnel motorisé (1), qui peut être utilisé en tant que dispositif polyvalent ou en combinaison pour le travail du sol ou l'entretien de gazon, par exemple la scarification, l'aération, la préparation du sol, la tonte de l'herbe, le passage au rouleau, le compactage, la taille de bordures ou pour des travaux de nettoyage tels que le soufflage de la neige, le balayage ou pour des services d'urgence tels que le pompage de l'eau, l'alimentation électrique, ou similaires, comprenant un entraînement primaire (27), deux modules de palier (**A**, **B**, **C**, **D**) accouplés au cadre de base (10) dudit dispositif fonctionnel (1) et un arbre d'entraînement (75, 80) fixé à rotation à l'outil de travail respectif (90, 95, 96, 97) et connecté auxdits modules de palier (**A**, **B**, **C**, **D**) sur ledit cadre de base (10), ledit cadre de base (10), pour recevoir lesdits modules de palier (**A**, **B**, **C**, **D**), présentant ainsi deux plaques latérales de montage ou de support (11, 12, 34) qui sont espacées latéralement et perpendiculairement par rapport à l'axe de rotation (31) dudit outil de travail (90, 95, 96, 97) pendant l'utilisation,
**caractérisé en ce que**
lesdits modules de palier (**A**, **B**, **C**, **D**) sont conçus sous la forme d'unités séparées qui peuvent être interchangées à souhait et qui peuvent être accouplées à l'une desdites plaques latérales de montage ou de support (11, 12, 34) par le biais de mécanismes à raccord rapide, et
**en ce que** les plages de vitesses et les sens de rotation requis pour les tâches de travail respectives avec lesdits outils de travail respectifs (90, 95, 96, 97) sont fixés en sélectionnant différentes combinaisons desdits modules de palier (**A**, **B**, **C**, **D**) et desdits arbres d'entraînement (75, 80) fixés à rotation audit outil de travail respectif (90, 95, 96, 97).

2. Système d'entraînement selon la revendication **1**, dans lequel ledit entraînement primaire (27) comprend une poulie d'entraînement (19) montée à rotation sur l'une desdites plaques latérales de montage ou de support (11, 34), qui fait tourner l'élément d'accouplement (60, 69) sur l'un desdits modules de palier (C ou D) qui est accouplé de manière sélective à ladite plaque latérale de montage ou de support (11, 34), et
ledit élément d'accouplement (60, 69) fait tourner directement, ou par l'intermédiaire d'une transmission à engrenages, l'un des goujons d'accouplement (61, 70) qui est connecté à rotation aux arbres d'entraînement (75, 80).

3. Système d'entraînement selon la revendication **2**, dans lequel les autres desdits modules de palier (**A**, **B**) accouplés à ladite plaque latérale de montage ou de support (12) pour reprendre lesdits arbres d'entraînement (75, 80) comprennent une douille de broche (40) ou un goujon d'accouplement (51) qui est tourillonné(e) de manière rotative sur lesdits modules de palier (**A**, **B**).

4. Système d'entraînement selon la revendication **3**, dans lequel l'un desdits arbres d'entraînement (80) présente une configuration à arbre double sous la forme d'un arbre extérieur creux (82) et d'un arbre intérieur central (81), ledit arbre intérieur central (81) étant entraîné à une extrémité par l'un desdits premiers modules de palier (**C**, **D**), et
l'autre extrémité dudit arbre intérieur central (81) faisant tourner ledit goujon d'accouplement (51) dudit module de palier (**B**) qui est situé axialement à l'opposé dudit premier module de palier, et ledit goujon d'accouplement (51) faisant tourner la douille d'accouplement (49), en étant coaxial audit goujon d'accouplement (51) et en étant connecté à rotation audit arbre extérieur creux (82), dans la même direction ou dans la direction opposée au moyen d'une transmission à engrenages.

5. Système d'entraînement selon la revendication **2** ou **4**, dans lequel ladite transmission à engrenages se présente sous la forme d'un train planétaire ou d'un train épicycloïdal.

6. Système d'entraînement selon les revendications **1** à **5**, dans lequel lesdits mécanismes à raccord rapide pour interchanger lesdits modules de palier (**A**, **B, C**, **D**) sur lesdites plaques latérales de montage ou de support (11, 12, 34) comprennent des éléments d'emboîtement (35, 36, 39, 47, 57, 67) qui fonctionnent à la manière d'un accouplement à baïonnette dont un côté est attaché à ladite plaque latérale de montage (12) ou à ladite plaque latérale de support (34) et l'autre côté est attaché à chacun desdits modules de palier (**A**, **B**, **C**, **D**).

7. Système d'entraînement selon la revendication **6**, dans lequel lesdits éléments d'emboîtement à raccord rapide (35, 36, 39, 47, 57, 67) sont protégés contre une libération automatique au moyen d'un loquet de sécurité (8, 9).

8. Système d'entraînement selon la revendication **2**, dans lequel ledit entraînement primaire (27) peut se présenter sous la forme d'une transmission à courroie ou d'une transmission à chaîne.

9. Système d'entraînement selon les revendications **1** à **8**, dans lequel ledit outil de travail devant être entraîné peut être une unité de scarification, une unité d'aération, un jeu de préparation du sol, un jeu de tonte à cylindre, une unité de passage au rouleau, une unité de compactage, une unité de taille des bordures, une unité de soufflage de la neige, un rouleau de balayage, une pompe à eau, un générateur d'électricité ou des dispositifs similaires.
